# EUROPEAN PATENT SPECIFICATION

(11) **EP 4 270 003 B1**
(45) Date of publication and mention of the grant of the patent: **01.07.2026**
(21) Application number: 23163852.9
(22) Date of filing: 23.03.2023
(51) Int. Cl.: G01N 30/96

(54) **MONITORING AND MITIGATING SUPPRESSOR FAILURE**
ÜBERWACHUNG UND ABSCHWÄCHUNG VON SUPPRESSORFEHLERN
SURVEILLANCE ET ATTÉNUATION DE DÉFAILLANCE DE SUPPRESSEUR

(30) Priority: 25.04.2022 US 202263363535 P
(43) Date of publication of application: 01.11.2023
(73) Proprietor: Dionex Corporation, Sunnyvale, CA 94085 (US)
(72) Inventor: CHEN, Yongjing, Sunnyvale, 94085 (US); LIU, Yan, Palo Alto (US)
(74) Representative: Boult Wade Tennant LLP

(56) References cited:
- WO-A1-2021/140686
- US-A1- 2009 218 238
- US-B2- 8 628 652

## Description

### FIELD OF THE INVENTION

This invention is directed to monitoring suppressors for failure and mitigating downstream consequences of the failure. In particular, monitoring systems are described that detect deviations from normal operation of a suppressor and in response to the deviation adjust aqueous ion flow to a detector.

### BACKGROUND OF THE INVENTION

Ion chromatography (IC) is a well-established analytical technique and for the past 40 years or so has been the preferred method for the determination of inorganic anions and small organic anions. IC is also used widely for the determination of inorganic cations, as well as carbohydrates and amino acids.

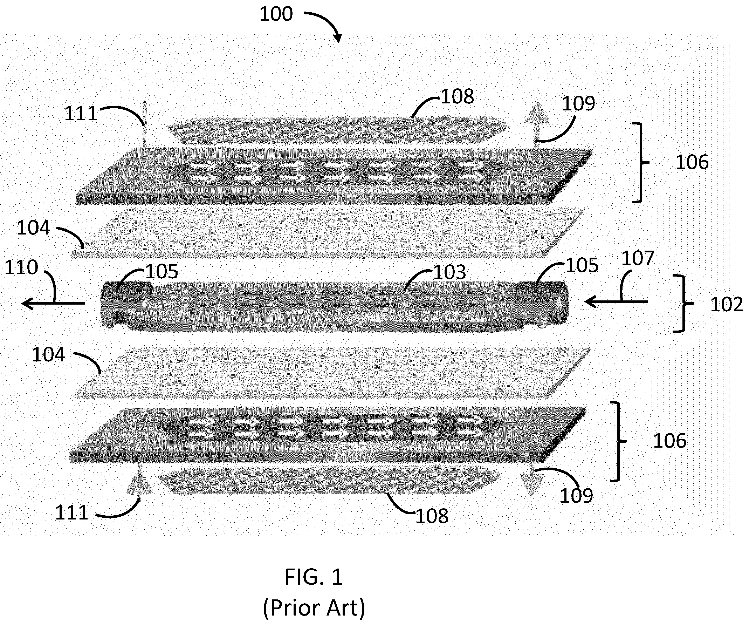

A suppressor is one of the key components in an IC system. Suppressor technology has evolved over the decades, but the fundamental function of the suppressor remains the same: to reduce the background conductivity of the eluent and increase the conductivity of the analytes via the ion-exchange process. The de-salting of the eluent increases the response of the analytes in the subsequent conductivity detection. FIG. 1 illustrates a three-channel sandwich-type design of a commercial suppressor 100. A sample channel 102 functions as a conduit carrying a sample in an eluent flowing into 107 the sample channel 102. An ion exchange resin 103 is packed into the conduit between two frits 105 to interact and exchange ions with the eluent, thereby suppressing the eluent. The sample channel 102 is separated by two ion exchange membranes 104 from flanking regenerant channels 106 carrying a regenerant stream 111, such as DI water. A flat plate electrode 108 is placed in each of the regenerant channels 106. A constant current is passed between the two electrodes 108 causing the electrolysis of water in the regenerant channels 106 and produces hydronium ions at one of the electrodes 108, and hydroxide ions at the other electrode 108. The hydronium or hydroxide ions regenerate the ion exchange resin 103 in a continuous process that suppresses the eluent, where waste containing eluent salts flows out 109 of the regenerant channels 106, and de-salted eluent flows out 110 of the sample channel 102. The continuous supply of regenerant 111 in the regenerant channel 106 is critical to the stability of the suppressor 100 performance.

In recent years mass spectrometry (MS) has become widely accepted for selective and sensitive detection in the analysis of large and small molecules. When coupled with liquid chromatography, including ion chromatograph (IC), atmospheric pressure ionization (API) MS (mostly in the form of electrospray ionization (ESI)) is a powerful tool for identification of compounds via determination of molecular mass or characteristic fragmentation of the analyte. IC interfaced with MS plays a major role in a variety of applications including trace analysis of inorganic and organic anions, speciation analysis and metallomics, mass isotopomer measurements of ionic species, and glycans and other complex carbohydrates analysis.

The eluents used in IC separation often contain non-volatile salts which are not compatible with ESI-MS. The suppressor is a critical device used to convert the non-volatile salt into water or the volatile acid form (i.e. acetic acid). For glycans and other complex carbohydrates analysis, various complex gradients using high concentration of sodium acetate (NaOAc)/sodium hydroxide (NaOH) eluents are often required. When the suppressor fails, the non-volatile salts having concentration up to 350 mM will enter the ESI-MS and cause extensive shutdown for cleaning and maintenance of the mass spectrometer. Suppressor failures often involve loss of water supply in the regenerant channels 106 from water reservoir runout or pump shutdown or broken connecting tubing. Another common failure mode is suppressor leaks due to excessive backpressure downstream caused by obstructions and clogging, such as by salts and sample components in electrospray capillary of the ESI-MS detector. WO 2021/140686 A1 discloses a suppressor device for an ion chromatograph provided between a separation column of the ion chromatograph and a detector. An electrodialytic suppressor includes: a first flow path through which an eluent from the separation column is supplied; a second flow path through which a regeneration liquid is supplied; an ion exchange membrane provided between the first flow path and the second flow path; and an electrode to which voltage is applied. A power supply circuit for applying voltage to the electrode is turned off when the eluent is not supplied to the first flow path of the electrodialytic suppressor.

Accordingly, there remains a need for an improved suppressor. Suppressors and systems that can avoid system damage and downtime due to periodic suppressor failures are highly desirable.

### SUMMARY

Systems, methods, and products to address these and other needs are described herein with respect to illustrative, non-limiting, implementations. Various alternatives, modifications and equivalents are possible.

According to a first aspect, a suppressor is according to the appended claims is provided.

According to a second aspect a system according to the appended claims is provided.

According to a third aspect, a method according to the appended claims is provided.

The suppressor, systems and methods described herein can avoid damage or downtime to elements such as detectors couple to the suppressor due to suppressor failures.

### BRIEF DESCRIPTION OF THE DRAWINGS

The foregoing and other features and advantages of the present embodiments will be more fully understood from the following detailed description of illustrative embodiments taken in conjunction with the accompanying drawings.
FIG. 1 illustrates a blown-up view of a suppressor.
FIG. 2 is a diagram depicting a system for monitoring and controlling aqueous ion flow to a detector, according to some implementations.
FIGs. 3A-3D are diagrammatic views of a suppressor, according to some implementations. FIG. 3A is a view showing a measurement probe proximate to an outlet. FIG. 3B is a view showing a measurement probe proximate to a constriction at the outlet. FIG. 3C is a view showing a first measurement probe proximate to an outlet, and a second measurement probe proximate to an inlet. FIG. 3D is a blown-up view of the suppressor.
FIG. 4 illustrates a chromatography system, according to some implementations.
FIG. 5 is a flow diagram illustrating a method for controlling a suppressor, according to some implementations.
FIG. 6 is a diagram showing an implementation for monitoring a suppressor.
FIG. 7 shows plotted data from the monitored suppressor of FIG. 6.
FIG. 8 is a diagram showing another implementation for monitoring a suppressor.
FIG. 9A shows plotted data from a first experiment using the monitored suppressor of FIG. 8. FIG. 9B shows plotted data from a second experiment using the monitored suppressor of FIG. 8.
FIG. 10 is a diagram showing another implementation for monitoring a suppressor.
FIG. 11 shows plotted data from an experiment using the suppressor in FIG. 10.
FIG. 12 is a diagram showing another implementation for monitoring a suppressor.
FIG. 13 is a plot showing data from an experiment using the suppressor in FIG. 12.
FIG. 14 shows plotted data from an experiment using a suppressor, according to some implementations.

The figures referred to above are not drawn necessarily to scale, should be understood to provide a representation of particular embodiments, and are merely conceptual in nature and illustrative of the principals involved. The same reference numbers are used in the drawings for similar or identical components and features shown in various alternative embodiments.

### DETAILED DESCRIPTION

In the description of the invention herein, it is understood that a word appearing in the singular encompasses its plural counterpart, and a word appearing in the plural encompasses its singular counterpart, unless implicitly or explicitly understood or stated otherwise. Furthermore, it is understood that for any given component or embodiment described herein, any of the possible candidates or alternatives listed for that component may generally be used individually or in combination with one another, unless implicitly or explicitly understood or stated otherwise. Moreover, it is to be appreciated that the figures, as shown herein, are not necessarily drawn to scale, wherein some of the elements may be drawn merely for clarity of the invention. Also, reference numerals may be repeated among the various figures to show corresponding or analogous elements. Additionally, it will be understood that any list of such candidates or alternatives is merely illustrative, not limiting, unless implicitly or explicitly understood or stated otherwise. In addition, unless otherwise indicated, numbers expressing quantities of ingredients, constituents, reaction conditions and so forth used in the specification and claims are to be understood as being modified by the term "about."

Accordingly, unless indicated to the contrary, the numerical parameters set forth in the specification and attached claims are approximations that may vary depending upon the desired properties sought to be obtained by the subject matter presented herein. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the subject matter presented herein are approximations, the numerical values set forth in the specific examples are reported as precisely as possible. Any numerical values, however, inherently contain certain errors necessarily resulting from the statistical dispersion found in their respective testing measurements.

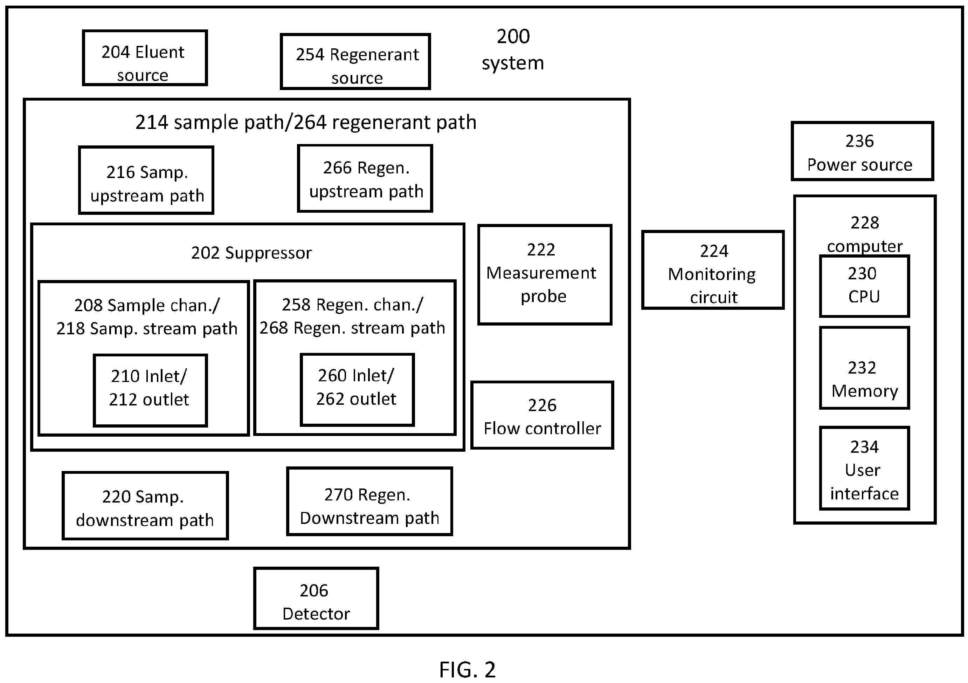

FIG. 2 depicts components of a system 200 for monitoring and controlling aqueous ion flow, according to some implementations. The system 200 includes a suppressor 202, an eluent source 204, a regenerant source 254, and a detector 206. The suppressor 202 includes a sample channel 208 for an eluent, a sample inlet 210 and a sample outlet 212. The suppressor 202 also includes a regenerant channel 258 for a regenerant, such as water, a regenerant inlet 260, and a regenerant outlet 262. The eluent source 204 is fluidly connected to the sample inlet 210 and the regenerant source 254 is fluidly connected to the regenerant inlet 260. The detector 206 is fluidly connected to the sample outlet 212 or to the regenerant source 254.

The system 200 also includes a sample path 214, a regenerant path 264 and one or more measurement probes 222. The sample path 214 includes a sample upstream path 216 connecting the eluent source 204 to the sample inlet 210, a sample stream path 218 through the sample channel 208, and a sample downstream path 220 from the sample outlet 212. The regenerant path 264 includes a regenerant upstream path 266 connecting the regenerant source 254 to the regenerant inlet 260, a regenerant stream path 268 through the regenerant channel 258, and a regenerant downstream path 270 from the regenerant outlet 262. The one or more measurement probes 222 are positioned in the sample path 214, the regenerant path 264, or in both the sample path 214 and the regenerant path 264.

The system 200 also includes a monitoring circuit 224 and a flow controller 226. The monitoring circuit 224 is coupled to the measurement probe 222 and provides a signal indicative of a property of a fluid measured by the measurement probe 222. For example, the measurement probe 222 can provide a measurement signal that is indicative of an eluent in the sample path 214, or a signal that is indicative of a regenerant in the regenerant path 264. The flow controller 226 is also coupled or connected to the monitoring circuit 224 and is configured to control the sample downstream path 220. The signal can be an average signal. For example, the signal can be averaged over a period of time. The signal can also be periodically sampled, such as with a sampling period of 0.1 millisecond or more.

The flow controller 226 provides the sample downstream path 220 to the detector 206 if the signal indicative of a property of a fluid being measured by the measurement probe 222 of the eluent is maintained within a predefined range. For example, the flow controller 226 can be a pump providing eluent flow in the sample path 214 and provides the de-salted eluent 110 (FIG. 1) to the detector 206 if the signal is maintained within the predefined range, wherein the flow controller 226 shuts said pump off if the signal is outside of the predefined range. In some implementations, the flow controller 226 is a valve that provides regenerant from the regenerant source 254 to the sample downstream path 220 and to the detector 206 if the signal is outside of the predefined range. In some implementations, the flow controller 226 includes the valve positioned in the regenerant path 264. The flow controller 226 is configured to a first valve position that provides regenerant to the regenerant inlet 260 when the signal is within the predefined range, and the flow controller 226 is configured to a second valve position that provides regenerant to the detector 206 when the signal is outside of the predefined range.

In some implementations, the system 200 also includes a computer or computer sub-system 228. The computer 228 includes one or more processors such as a CPU 230, memory 232, and a user interface 234. Memory 232 may include, for example, electronic memory devices, such as random-access memory (RAM), read-only memory (ROM), programmable read-only memory (PROM), electrically erasable programmable read only memory (EEPROM), and flash memory. Memory 232 may also include electromechanical memory, such as magnetic disk drives, tape drives, thumb drives, and optical disk drives. The user interface 234 can include, for example, a keyboard, a touch control screen, a monitor, a mouse, a speaker, a microphone and the like. The computer 228 can be connected to the other components of the system 200. The computer can be a physically integrated part of the system 200, such as encased in a single unit, or directly physically attached to components or a unit housing the components of system 200. Physical attachment includes electric wire connections and the like for data and signal transfer between the computer 228 and electrical components of the rest of the system 200. The computer can also include a physical or a remote (e.g., Wi-Fi, Zigbee, Bluetooth) connection to other computers or a server, such as the cloud. The computer 228 can also be partially, or wholly wirelessly connected to the electrical components of the system 200, such as the detector 206, the measurement probe 222 and the flow controller 226.

The predefined range can be a parameter used in an algorithm saved to the memory 232 and executed by the CPU 230 of the computer 228. The predefined range can be provided by a user as an input through the user interface 234 or can be a default value written into the algorithm. In some implementations, the predefined range has an upper bound. In some implementations, the predefined range has a lower bound. In some implementations, the predefined range has an upper and lower bound. In some implementations, the predefined range is an exclusion range, where the flow controller 226 does not provide the sample downstream path 220 to the detector 206 if the signal is maintained within the exclusion range.

The system 200 can include other components and subsystems. For example, a power source 236. The power source 236 can be a physical power source, such as a plug to a wall socket, a battery, a contactless inductive power source, or a combination of these. Components and subcomponents of the system 200 can have independent power sources 236. The system 200 can also include actuators, pumps, microcontrollers, heaters, chillers, tubing, pumps, cables, columns (e.g., separation or chromatograph columns), and combinations of these.

In some implementations, the system 200 is implemented as a liquid chromatography system. In such implementations the eluent source 204 is an output from a chromatography column. In some implementations, the detector 206 is a mass spectrometer, such as an ESI mass spectrometer. In some implementations, the detector 206 is a conductivity detector. In some implementations, more than one detector 206 is used, such as a conductivity detector and a mass spectrometer. In some implementations, the system 200 is implemented as liquid chromatography system wherein the suppressor 202 removes salts, such as a buffer (e.g., phosphate buffers) used in an aqueous liquid chromatograph system (e.g., water combined with polar solvents such as alcohols, acetonitrile, acetone, tetrahydrofuran and dimethyl sulfoxide).

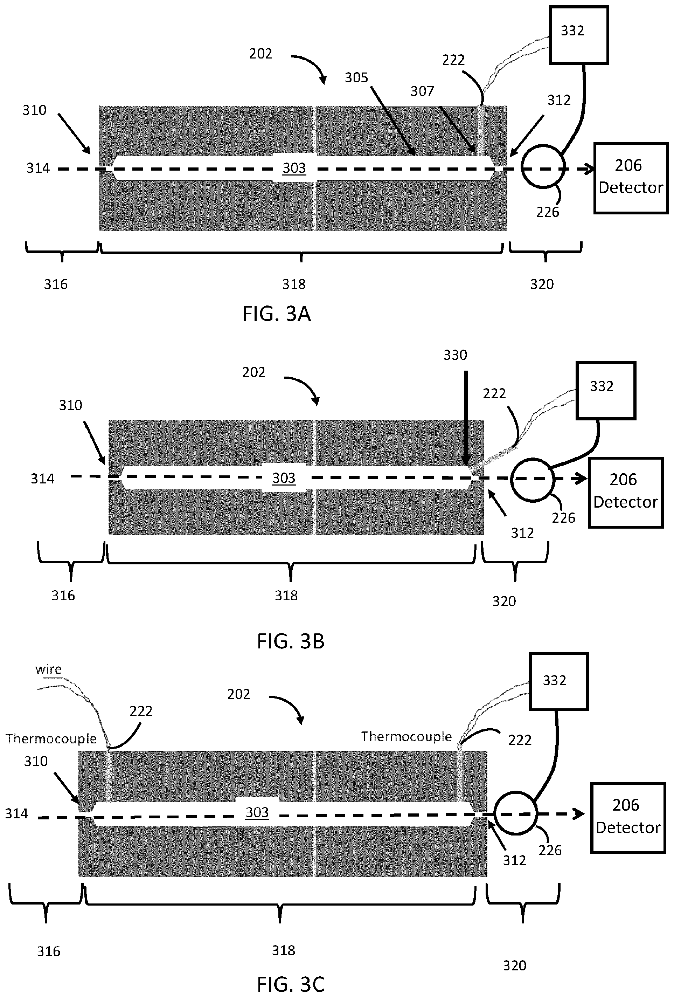

FIGs. 3A-3D depict suppressors 202, according to some implementations. The suppressors 202 include the one or more channels 303, a flow path 314 for each channel 303, and one or more of the measurement probes 222 positioned in the flow path 314, indicated by the dashed arrow. Each channel 303 includes an inlet 310 and an outlet 312. The flow path 314 includes the upstream path 316 to the inlet 310, a channel stream path 318 though the channel 303, and the downstream path 320 from the outlet 312.

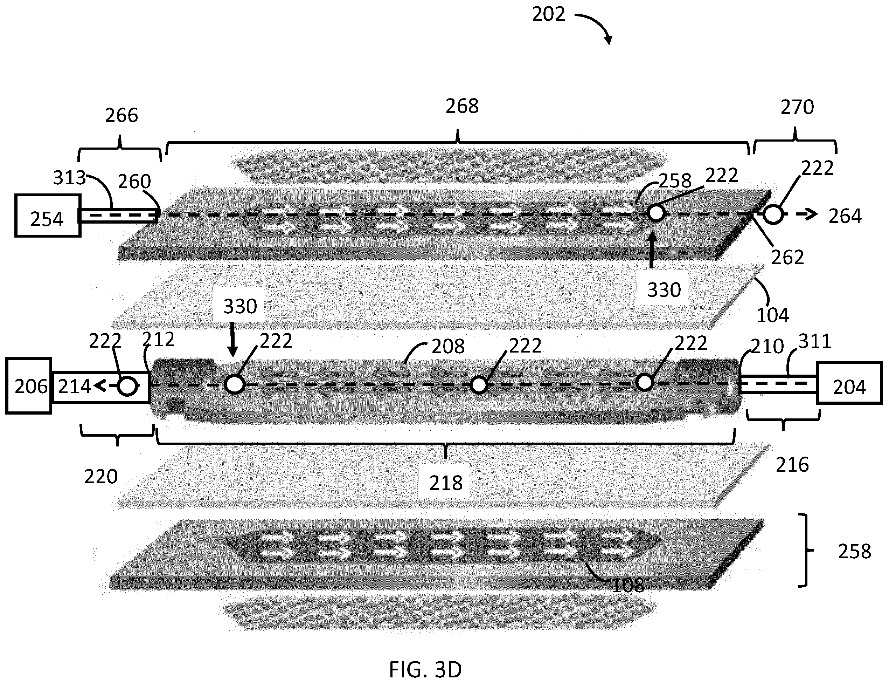

In some implementations, the one or more channels 303 include the sample channel 208 having a sample inlet 210 and a sample outlet 212 and a regenerant channel 258 having a regenerant inlet 260 and a regenerant outlet 262 (FIG. 3D). In this implementation the inlet 310 includes the sample inlet 210 and the regenerant inlet 260, and the outlet 312 includes the sample outlet 212 and the regenerant outlet 262. The ion exchange membrane 104 separates the sample channel 208 and the regenerant channel 258. A first conduit 311 provides a fluid connection between the eluent source 204 and the sample inlet 210, and a second conduit 313 provides a fluid connection between a regenerant source 254 and the regenerant inlet 260. The fluid path 314 comprises the sample path 214 and the regenerant path 264. The sample path 214 includes the sample upstream path 216 connecting the eluent source 204 to the sample inlet 210, the sample stream path 218 through the sample channel 208, and the sample downstream path 220 connecting the sample outlet 212 to the detector 206. The regenerant path 264 includes the regenerant upstream path 266 connecting the regenerant source 254 to the regenerant inlet 260, the regenerant stream path 268 through the regenerant channel 258, and the regenerant downstream path 270 from the regenerant outlet 262. In some implementations, the regenerant downstream path 270 connects the regenerant outlet 262 to the detector 206 and the sample downstream path 220 is not connected to the detector 206, or the sample downstream path 220 does not provide any fluid to the detector 206. One or more of the measurement probes 222 are positioned in the sample path 214, in the regenerant path 266, or in the sample path 214 and in the regenerant path 264.

In some implementations, the measurement probe 222 is a temperature probe, such as a thermocouple or a thermal IR sensor. In some implementations, the measurement probe 222 is a pressure sensor. In some implementations, the measurement probe 222 is a flow meter. In implementations using more than one measurement probe 222, the measurement probes 222 can be the same kind, such as both being a temperature probe. In some other implementations using more than one measurement probe 222, the measurement probes 222 can be different kinds, such as a temperature probe and a pressure sensor. In some implementations, the measurement probes are positioned in the sample path 214 and the regenerant path 264. In some implementations, the measurement probes 222 are positioned only in the sample path 214. In some implementations, the measurement probes 222 are positioned only in the regenerant path 266. In some implementations, the measurement probes may be positioned outside of the sample path 214 and the regenerant path 264.

As depicted in FIGs. 3A-3D, in some implementations at least one of the measurement probes 222 is positioned in one of the channels 303/208/258. In some implementations, the measurement probe 222 is positioned anywhere in one of the channels 303/208/258. In some implementations, the measurement probe 222 is positioned proximate to the inlet 310 (FIG. 3C). In some implementations, the measurement probe 222 is positioned proximate to the outlet 312 (FIGs. 3A, 3B). In some implementations, the measurement probe 222 is positioned at a constriction 330 and proximate to the outlet 312, 212 of the channel 303, 208, (FIG. 3B, 3D). In some implementations, a first measurement probe 222 is positioned proximate to the inlet 310 and second measurement probe 222 is positioned next to the outlet 312 (FIG. 3C).

In some implementations, a position proximate to the inlet 310 is a position that is at a distance 49% or less (e.g., 40% or less, 30% or less, 20% or less, 10% or less) of a total length of the channel 303 from the inlet 310; and a position that is proximate to the outlet 312 is a position that is at a distance of 49% or less (e.g., 40% or less, 30% or less, 20% or less, 10% or less) of a total length of the channel 303 from the outlet 312. In the figures, the total length of the channel 303 corresponds to the channel stream path 318.

In some implementations, at least one of the measurement probes 222 is positioned in the downstream path 320, such as the sample downstream path 220 or the regenerant downstream path 270. In some implementations, at least one of the measurement probes 222 is positioned in the upstream path 316, such as the upstream sample path 216 or the upstream regenerant path 266. In some implementations, at least one measurement probe 222 is positioned in the downstream path 320, such as the sample downstream path 220 or the downstream regenerant path 270; and at least one measurement probe 222 is positioned in the upstream path 316, such as the sample upstream path 216, or the upstream regenerant path 266. In some implementations, at least one of the measurement probes 222 is positioned in the downstream path 320 proximate to the outlet 312. In some implementations, at least one of the measurement probes 222 is positioned in the sample downstream path 220 proximate to the outlet 212. In some implementations, at least one of the measurement probes 222 is positioned in the downstream regenerant path 270 proximate to the outlet 262. In some implementations, at least one of the measurement probes 222 is positioned in the upstream path 316 proximate to the inlet 310. In some implementations, at least one of the measurement probes 222 is positioned in the upstream sample path 216 proximate to the inlet 210. In some implementations, at least one of the measurement probes 222 is positioned in the upstream regenerant path 266 proximate to the inlet 260.

The suppressor 202 further includes the flow controller 226 which is coupled to the monitoring circuit 332 and the flow controller 226 is configured to control the downstream path 320 in response to the signal. In some implementations, the channel 303 includes the sample channel 208 and the downstream path/ sample downstream path 320, 220 directs the fluid from the sample channel 208 into the detector 206 when the signal is maintained within the predefined range, and the downstream path 320/ sample downstream path 220 prevents the fluid from entering the detector 206 when the signal is outside of the predefined range. In some implementations, the detector 206 is a mass spectrometer.

In some implementations, the probe 222 includes a working end 307 in contact with the fluid in the fluid path 314, wherein the working end 307 is positioned flush to a wall of a conduit defining the fluid path (FIG. 3A). For example, the conduit includes the channel 303 which has a wall 305. The end 307 of the measurement probe 222 is flush to the wall 305. This positioning reduces any dead volume and flow disruptions in the channel 303 in comparison to positioning the end 307 into the channel 303.

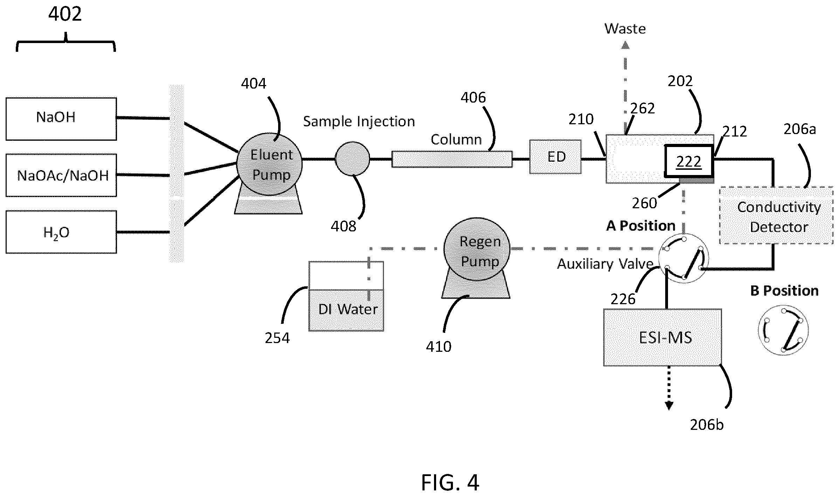

FIG. 4 illustrates a chromatography system 400, according to some implementations. Reservoirs 402 provide aqueous solutions that are mixed to form an eluent supplied by an eluent pump 404 to a chromatography column 406 through a sample injection port 408. The suppressor 202 is placed uptream of a conductivity detector 206a and a mass spectrometer 206b. The conductivity detector 206a is included in this implementation. Eluent enters the suppressor 202 at sample inlet 210 and exits the suppressor a sample outlet 212. A regenerant source 254 is supplied by a regenerant pump 410 to the regenerant inlet 260. The regenerant exits the suppressor 202 through the regenerant outlet 262. The measurement probe 222 is positioned in the suppressor 202, near the sample outlet 212.

The flow controller 226, configured in this implementation as a 6-port injection valve, is installed between the suppressor 202 (or the optional conductivity detector 206a) and the mass spectrometer 206b. When the flow controller 226 is in the A position, the eluent flows through the suppressor 202 and to the mass spectrometer 206b, and the regenerant flows through the suppressor 202. The figure also shows the valve in a B position (bottom right of the figure). When the flow controller 226 is in the B position, the regenerant pump 410 delivers the regenerant to the mass spectrometer 206b, and the eluent does not flow into the mass spectrometer 206b.

When the signal from the monitoring circuit 224 is within the predefined range, the flow controller 226 is in the A position. When the signal from the monitoring circuit 224 is outside of the predefined range, the flow controller 226 is in the B position. The flow controller 226 can also include, or alternatively is, the eluent pump 404. For example, the eluent pump 404 can run normally when the signal from the monitoring circuit 224 is within the predefined range, and the eluent pump 404 can be shut off when the signal from the monitoring circuit 224 is outside of the predefined range.

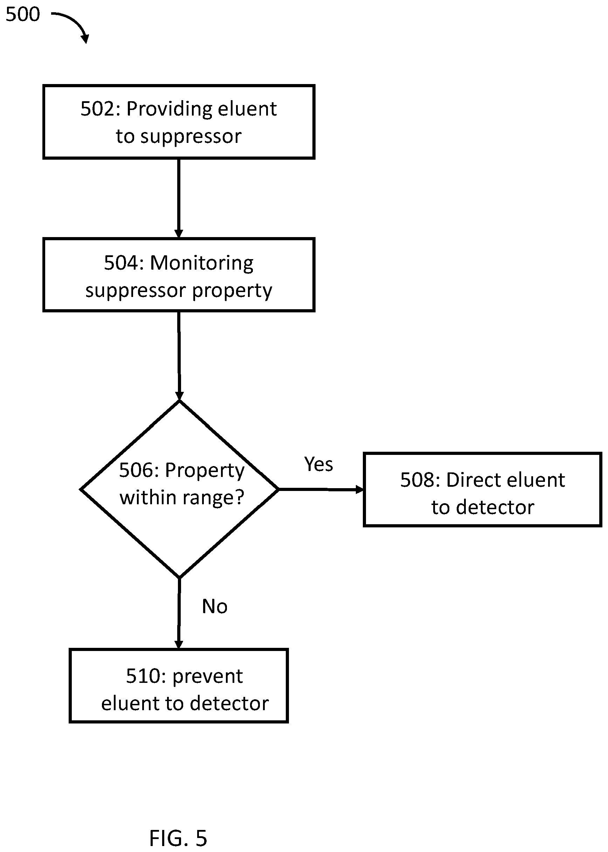

FIG. 5 is a flow diagram illustrating a method 500 for controlling the suppressor 202, according to some implementations. In a first step 502, an eluent is provided to the suppressor 202 (FIGs 3A-3C). A property of a fluid in the flow path 314 of the suppressor 202 is monitored in a second step 504, to provide a monitored property. As previously described, the flow path 314 can be the sample path 214 or the regenerant path 264. In a third step 506 the monitored property is compared to a predefined range. If the monitored property is with the predefined range, the sample downstream path 220 is directed to the detector 206 in a fourth step 508. If the monitored property is outside of the predefined range, the sample downstream path 220 is blocked in a fourth step 508. In some implementations, the monitored property is a temperature, a pressure, or a flow rate of a fluid in the flow path 314 of a channel 303 of the suppressor 202. **In** some implementations, the property is monitored by a measurement probe in the sample path 214. **In** some implementations, the property is monitored by a measurement probe in the regenerant path 264. The measurement probe provides a measurement data input indicative of the monitored property to the computer 228 (FIG. 2). The computer 228 includes an algorithm written to the memory 232 of the computer 228. When the algorithm is executed by the CPU 230 of the computer 228, the algorithm compares the measurement data input to the predefined range, and the computer 228 sends an output signal to the flow controller to direct the downstream flow. **In** some implementations, the pre-defined range is entered as a data input to the computer by a user and can be changed or selected by the user. In some implementations, the predefined range is a default value or values of the algorithm.

### EXEMPLIFICATIONS

Elements as labeled are as previously described with additional details described below.

### Example 1: Effective temperature sensing of disrupted regenerant flow on a high-performance anion exchange chromatography (HPAE) system.

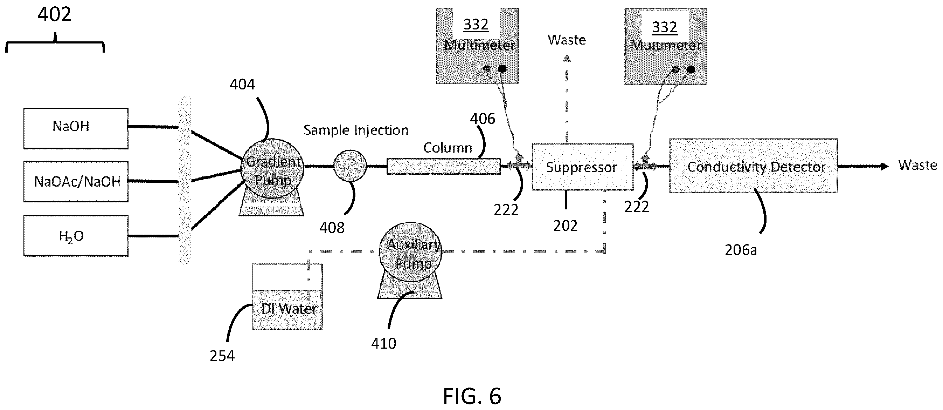

FIG. 6 shows an implementation for monitoring the suppressor 202. Two measurement probes 222 configured as thermocouples (Omega 1-1/2 inches long hollow tube TC, HTTC36-K-116G-1.5) were used to measure the temperature of the eluent flow. One thermocouple was placed at the inlet, the other was placed at the outlet of the suppressor 202. The normal regenerant flow was set to 1.5 mL/min. During the 10 mM NaOAc/100 mM NaOH to 100 mM NaOAc/100 mM NaOH gradient, the regenerant flow was stopped at 10 min and resumed at 20 min. Digital multimeters (DMM) were used to monitor the thermocouples (e.g., each including the monitoring circuit 332). A downstream conductivity detector 206a was connected to the suppressor 202.

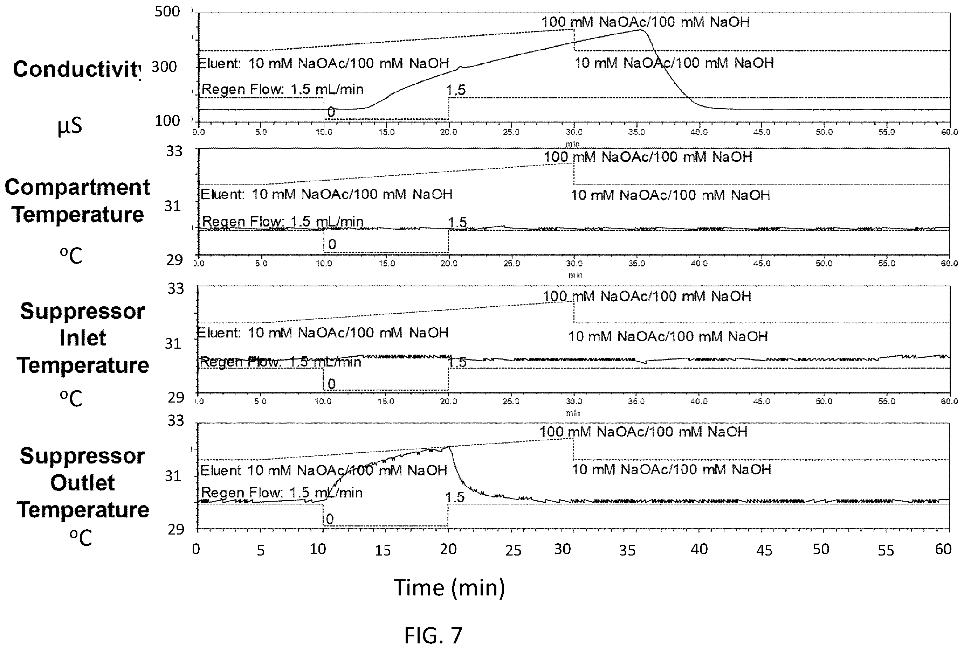

FIG. 7 shows plotted data from the monitored suppressor 202. Both the compartment and suppressor inlet temperatures remained stable at 30 °C throughout the entire run. The suppressor outlet temperature was shown to respond rapidly to the disruption of the regenerant flow and increase by 2 °C at the end of the disrupted flow, then drop to normal level after the regenerant flow was resumed.

### Experimental conditions.

IC system: Thermo Scientific Dionex ICS-6000.
Eluent: 10 mM NaOAc/100 mM NaOH during 0-5 min, 10 mM NaOAc/100 mM NaOH - 100 mM NaOAc/100 mM NaOH during 5-30 min, 10 mM NaOAc/100 mM NaOH during 30-60 min.
Eluent flow rate: 0.25 mL/min.
Suppressor: Thermo Scientific Dionex ERD 500 2-mm.
Suppressor current: 150 mA.
Regenerant flow rate: 1.5 mL/min during 0-10 min, 0 mL/min during 10-20 min, 1.5 mL/min during 20-60 min.
Compartment temperature: 30 °C.
Multimeter: Fluke 289 True-RMS Data Logging Multimeter.
Detector: conductivity.
Data recording: Thermo Scientific Dionex Chromeleon7.

### Example 2. Effective temperature sensing of varied disrupted regenerant flow on a high-performance anion exchange chromatography (HPAE) system.

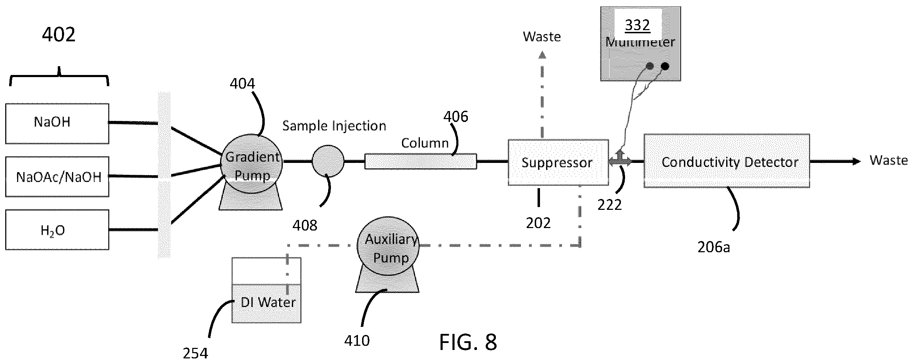

FIG. 8 shows another implementation for monitoring the suppressor 202. One measurement probe 222 configured as a thermocouple (Omega 1-1/2 inches long hollow tube TC, HTTC36-K-116G-1.5) was placed at the outlet of the suppressor. The normal regenerant flow was set to 1.5 mL/min. A DMM was used to monitor the thermocouples (the monitoring circuit 332). A downstream conductivity detector 206a was connected to the suppressor 202.

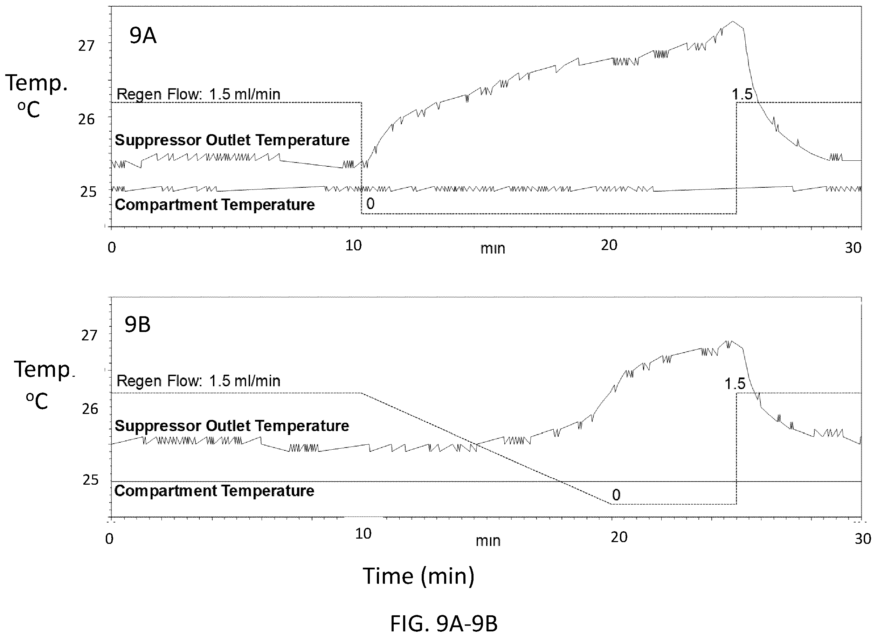

FIG. 9A shows plotted date from a first experiment where the regenerant flow was stopped at 10 min and resumed at 25 min. The suppressor outlet temperature was shown to respond rapidly to the disruption of the regenerant flow and increase by more than 2 °C at the end of the disrupted flow, then drop to normal level after the regenerant flow was resumed.

FIG. 9B shows plotted date from a second experiment where the regenerant flow was reduced from 1.5 to 0 mL/min during 10-20 min, simulating gradual loss of regenerant flow. In response to the gradual loss of the regenerant flow, the suppressor outlet temperature was shown to gradually rise by 2 °C at the end of the disrupted flow, then drop to normal level after the regenerant flow was resumed.

### Experimental conditions.

IC system: Thermo Scientific Dionex ICS-6000.
Eluent: 50 mM NaOAc/100 NaOH.
Eluent flow rate: 0.25 mL/min.
Suppressor: Thermo Scientific Dionex ERD 500 2-mm.
Suppressor current: 150 mA.
Regenerant flow rate: (A) 1.5 mL/min during 0-10 min, 0 mL/min during 10-25 min, 1.5 mL/min during 20-30 min; (B) 1.5 mL/min during 0-10 min, 1.5 - 0 mL/min during 10-20 min, 0 mL/min during 20-25 min, 1.5 mL/min during 20-30 min.
Compartment temperature: 25 °C.
Multimeter: Fluke 289 True-RMS Data Logging Multimeter.
Detector: conductivity.
Data recording: Thermo Scientific Dionex Chromeleon 7.

### Example 3. Effective temperature sensing of disrupted regenerant flow on a regent-free ion chromatography (RFIC) system.

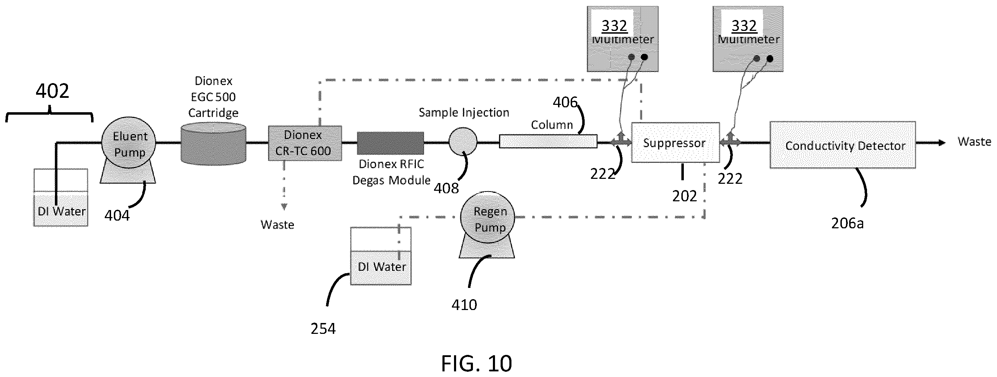

FIG. 10 shows another implementation for monitoring the suppressor 202. Two measurement probes 222 configured as thermocouples (Omega 1-1/2 inches long hollow tube TC, HTTC36-K-116G-1.5) were used to measure the temperature of the eluent flow. One thermocouple was placed at the inlet, the other was placed at the outlet of the suppressor. The normal regenerant flow was set to 0.25 mL/min. During the 10 mM to 100 mM KOH gradient, the regenerant flow was stopped at 15 min and resumed at 25 min.

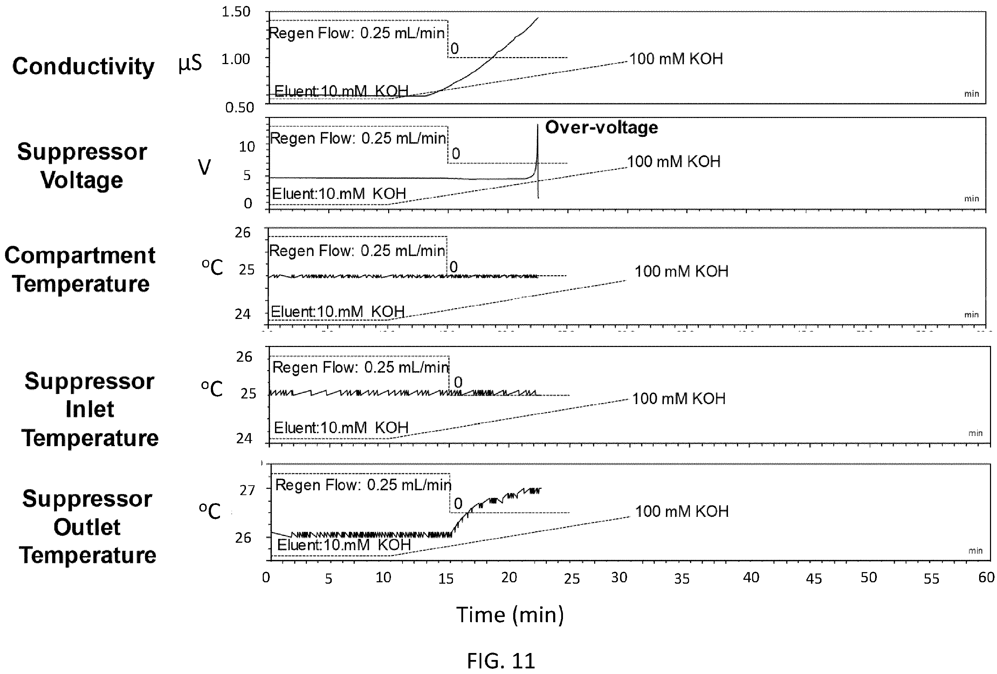

FIG. 11 shows plotted data from the experiment. Both the compartment and suppressor inlet temperatures remained stable at 25 °C throughout the entire run. The suppressor outlet temperature was shown to respond rapidly to the disruption of the regenerant flow and increase by 1 °C until at 22.5 min, the suppressor voltage was over the pre-set safety value, and the run was shut down.

### Experimental conditions.

IC system: Thermo Scientific Dionex ICS-6000.
Eluent: 10 mM KOH during 0-10 min, 10-100 mM KOH during 10-30 min, 100 mM KOH during 30-60 min.
Eluent flow rate: 0.25 mL/min.
Suppressor: Thermo Scientific Dionex ADRS 600 2-mm.
Suppressor current: 62 mA.
Regenerant flow rate: 0.25 mL/min during 0-15 min, 0 mL/min during 15-25 min, 1.5 mL/min during 25-60 min.
Compartment temperature: 25 °C.
Multimeter: Fluke 289 True-RMS Data Logging Multimeter.
Detector: conductivity.
Data recording: Thermo Scientific Dionex Chromeleon 7.

### Example 4. Effective temperature sensing of obstruction of eluent flow on a regent-free ion chromatography (RFIC) system.

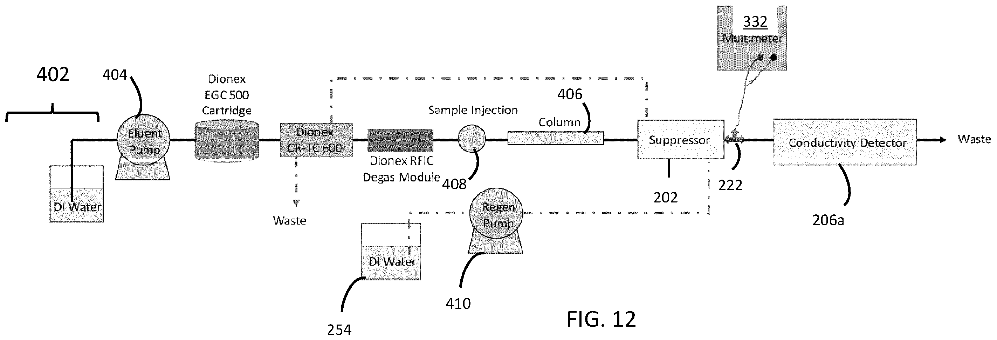

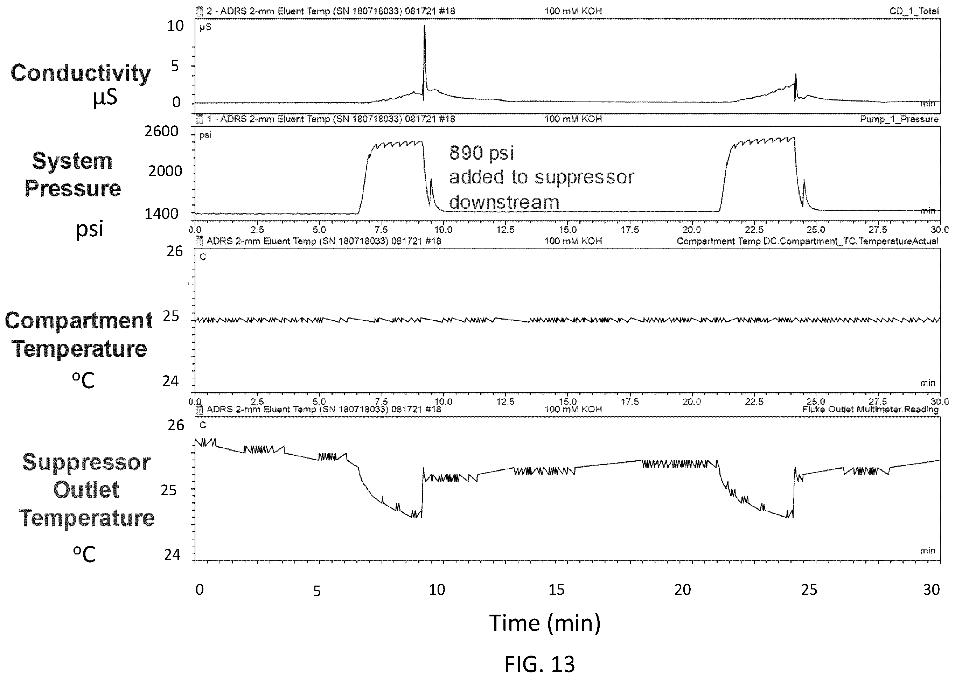

FIG. 12 shows another implementation for monitoring the suppressor 202. One measurement probe 222 configured as a thermocouple (Omega 1-1/2 inches long hollow tube TC, HTTC36-K-116G-1.5) was placed at the outlet of the suppressor 202. A flow restrictor (Idex Adjustable BPR, P-880) was placed at the outlet of the conductivity detector 206a to exert 6,14 x 10⁶ Pa (890 psi) backpressure to the suppressor, at 6.5. min and 21 min, respectively, as shown in the system pressure trace shown in FIG. 13. The duration of the flow restriction was roughly 3 min at each exertion. The suppressor outlet temperature was shown to drop by around 1 °C in response in response to the increased backpressure and restore to baseline after the restriction was removed.

### Experimental conditions.

IC system: Thermo Scientific Dionex ICS-6000.
Eluent: 100 mM KOH.
Eluent flow rate: 0.25 mL/min.
Suppressor: Thermo Scientific Dionex ADRS 600 2-mm.
Suppressor current: 62 mA.
Regenerant flow rate: 0.25 mL/min.
Compartment temperature: 25 °C.
Multimeter: Fluke 289 True-RMS Data Logging Multimeter.
Detector: conductivity.
Data recording: Thermo Scientific Dionex Chromeleon 7.

### Example 5: Pressure sensor

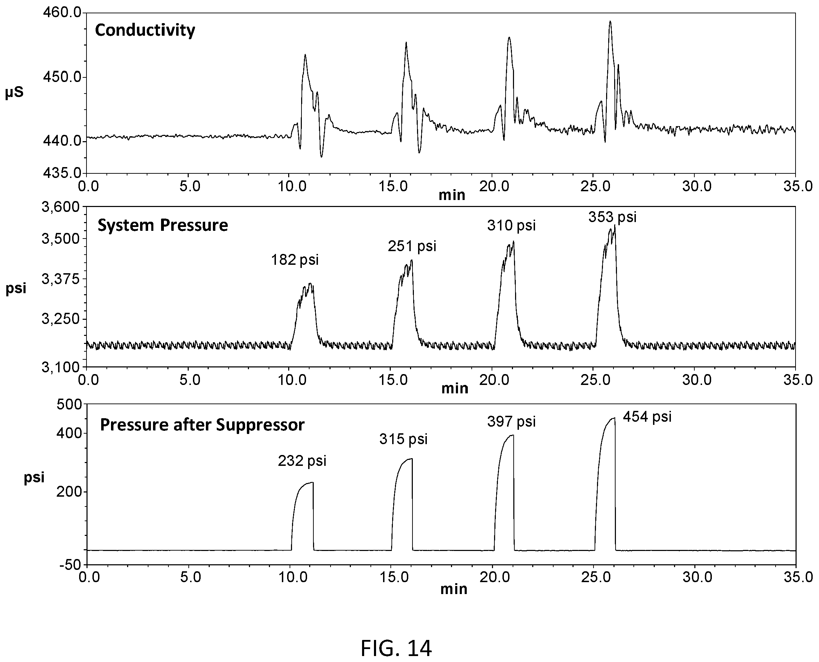

A pressure transducer from an ICS-5000+ DP pump was connected to the eluent outlet of the suppressor Dionex ERD 500 2-mm. A series of backpressure tubing were connected to the outlet of the conductivity detector to apply varied backpressure to the simulate obstruction of the eluent flow at the downstream of the suppressor. The conductivity detector was used to monitor the effect of the elevated backpressure on suppression efficiency (not a direct indication of how much salt broke through). Backpressure tubing that applies 2 x 10⁶ Pa, 2,8 x 10⁶ Pa, 3,4 x 10⁶ Pa, 4,1 x 10⁶ Pa (300, 400, 500, 600 psi) at the flow rate of 0.25 mL/min was connected to the outlet of the conductivity detector for approximately 1 min at each pressure value, with approximately 4 min interval between each pressure exertion. As shown by the plotted data in FIG. 14, the conductivity, system pressure, and transducer signals all responded to the pressure exertions. The conductivity increased as a result of some salt breakthrough. The pressure increases from system pressure and transducer after the suppressor showed values reasonably close to the theoretical pressure values calculated based on i.d. and length of the backpressure tubing. As the backpressure applied increases, the measured pressure increase show increasing deviation from the theoretical value, as a result of pressure being absorbed from eluent channel to regenerant channels of the suppressor (inter-channel leaking).

### Experimental conditions.

IC system: Thermo Scientific Dionex ICS-6000.
Eluent: 10 mM NaOAc/100 NaOH.
Eluent flow rate: 0.25 mL/min.
Suppressor: Thermo Scientific Dionex ERD 500 2-mm.
Suppressor current: 150 mA.
Regenerant flow rate: 1.5 mL/min.
Compartment temperature: 30 °C.
Detector: conductivity.
Pressure sensor: transducer from ICS-5000+ DP.
Data recording: Thermo Scientific Dionex Chromeleon 7.

Those having skill in the art, with the knowledge gained from the present disclosure, will recognize that various changes can be made to the disclosed apparatuses and methods in attaining these and other advantages, without departing from the scope of the present disclosure. As such, it should be understood that the features described herein are susceptible to modification, alteration, changes, or substitution. For example, it is expressly intended that all combinations of those elements and/or steps which perform substantially the same function, in substantially the same way, to achieve the same results are within the scope of the embodiments described herein. Substitutions of elements from one described embodiment to another are also fully intended and contemplated. Other embodiments will be evident to those of skill in the art. It should be understood that the foregoing description is provided for clarity only and is merely exemplary. The scope of the present disclosure is not limited to the above implementation and examples but is encompassed by the following claims.

## Claims

1. A suppressor comprising:
one or more channels (303), each channel (303) including an inlet (310) and an outlet (312);
a flow path (314) for each of the channels (303), each flow path (314) including, an upstream path (316) to the inlet (310), a channel stream path (318) through the channel (303) and connecting the inlet (310) to the outlet (312), and a downstream path (320) from the outlet (312); and
one or more of a measurement probe (222) positioned in the flow path (314);
wherein the suppressor further includes a monitoring circuit (332) coupled to the measurement probe (222), the monitoring circuit (332) providing a signal indicative of a property of a fluid in the flow path (314) measured by the measurement probe (222),
**characterised in that** the suppressor further comprises a flow controller (226) coupled to the monitoring circuit (332) and configured to control the downstream path (320) in response to the signal, and
wherein the channel (303) includes a sample channel (208) and the downstream path (320) directs the fluid from the sample channel (208) into a detector (206) when the signal is maintained within a predefined range, and the downstream path (320) blocks the fluid from entering the detector (206) when the signal is outside of the predefined range.

2. The suppressor according to claim 1 wherein:
the one or more channels (303) comprise a sample channel (208) having a sample inlet (210) and a sample outlet (212) and a regenerant channel (258) having a regenerant inlet (260) and a regenerant outlet (262); wherein an ion exchange membrane (104) separates the sample channel (208) and the regenerant channel (258), a first conduit (311) provides a fluid connection between an eluent source (204) and the sample inlet (210), a second conduit (313) provides a fluid connection between a regenerant source (254) and the regenerant inlet (260);
the flow path (314) includes a sample path (214) and a regenerant path (264); wherein the sample path (214) includes a sample upstream path (216) connecting the eluent source (204) to the sample inlet (210), a sample stream path (218) through the sample channel (208), and a sample downstream path (220) from the sample outlet (212); wherein the regenerant path (264) includes a regenerant upstream path (266) connecting a regenerant source (254) to the regenerant inlet (260), a regenerant stream path (268) through the regenerant channel (258), and a regenerant downstream path (270) from the regenerant outlet (262); and
one or more of the measurement probes (222) independently positioned in the sample path (214), in the regenerant path (264), or in the sample path (214) and in the regenerant path (264).

3. The suppressor according to claim 1 or claim 2, wherein the one or more measurement probes (222) are independently selected from a temperature probe, a pressure sensor, and a flow meter.

4. The suppressor according to any of claims 1-3, wherein at least one of the measurement probes (222) is positioned in one of the channels (303)
wherein optionally;
the measurement probe (222) is positioned proximate to the outlet (312),
the measurement probe (222) is positioned proximate to the inlet (310), or
the measurement probe includes a first measurement probe (222) and a second measurement probe (222), wherein the first measurement probe (222) is positioned proximate to the outlet (312), and the second measurement probe (222) is positioned proximate to the inlet (310).

5. The suppressor according to any of claims 1-4, wherein at least one of the measurement probes (222) is positioned in the downstream path (320) of one of the channels (303).

6. The suppressor according to any of claims 1-5, wherein at least one of the measurement probes (222) is positioned in the upstream path (316) of one of the channels (303).

7. The suppressor according to claim 1, wherein:
the detector (206) is a mass spectrometer.

8. The suppressor according to any of claims 1-7, wherein the probe (222) includes a working end (307) in contact with a fluid in the flow path (314), wherein the working end (307) is positioned flush to a wall (305) of a conduit defining the fluid path (314).

9. A system (200) for monitoring and controlling aqueous ion flow comprising:
a suppressor (202) according to claim 2 or any of claims 3 to 8 as dependent on claim 2;
an eluent source (204) fluidly connected to the sample inlet (210) and a regenerant source (254) fluidly connected to the regenerant inlet (260); and
a detector (206) fluidly connected to the sample outlet (212) or to the regenerant source (254).

10. A method (500) for controlling a suppressor (202) according to any of claims 1 to 8, the method comprising:
providing (502) an eluent to the suppressor (202);
monitoring (504) a property of a fluid in a flow path (314) of a channel (303) of the suppressor (504) to provide a monitored property; and
directing a sample downstream path (220) of the eluent from the suppressor (202) to a detector (206) if a monitored property is within of a predefined range (506, 508) or preventing the sample downstream path (220) from reaching the detector (206) if the monitored property is outside of the predefined range (506, 510).

11. The method according to claim 10, wherein the monitored property is a temperature, a pressure or a flow rate of the flow path (314).

12. The method according to claim 10 or claim 11, wherein the monitored property is monitored by a measurement probe (222) in the flow path (314), wherein the measurement probe provides a measurement data input indicative of the monitored property to a computer (228), said computer (228) including an algorithm written to a memory (232) of the computer (228), wherein when the algorithm is executed by a CPU (230) of the computer (228), the algorithm compares the measurement data input to the predefined range, and the computer (228) sends an output signal to a flow controller (226) to direct the sample downstream path (220).

## Patentansprüche

1. Ein Suppressor, umfassend:
einen oder mehrere Kanäle (303), wobei jeder Kanal (303) einen Einlass (310) und einen Auslass (312) umfasst;
einen Strömungspfad (314) für jeden der Kanäle (303), wobei jeder Strömungspfad (314) einen stromaufwärtigen Pfad (316) zum Einlass (310), einen Kanalströmungspfad (318) durch den Kanal (303), der den Einlass (310) mit dem Auslass (312) verbindet, sowie einen stromabwärtigen Pfad (320) vom Auslass (312) umfasst; und
eine oder mehrere Messsonden (222), die im Strömungspfad (314) positioniert sind;
wobei der Suppressor ferner eine Überwachungsschaltung (332) umfasst, die mit der Messsonde (222) gekoppelt ist, wobei die Überwachungsschaltung (332) ein Signal bereitstellt, das eine von der Messsonde (222) gemessene Eigenschaft eines Fluids im Strömungspfad (314) anzeigt,
**dadurch gekennzeichnet, dass** der Suppressor ferner einen Strömungsregler (226) umfasst, der mit der Überwachungsschaltung (332) gekoppelt und so konfiguriert ist, dass er den stromabwärtigen Pfad (320) in Reaktion auf das Signal steuert, und
wobei der Kanal (303) einen Probenkanal (208) umfasst und der stromabwärtige Pfad (320) das Fluid aus dem Probenkanal (208) in einen Detektor (206) leitet, wenn das Signal innerhalb eines vordefinierten Bereichs gehalten wird, und der stromabwärtige Pfad (320) verhindert, dass das Fluid in den Detektor (206) gelangt, wenn das Signal außerhalb des vordefinierten Bereichs liegt.

2. Der Suppressor gemäß Anspruch 1, wobei:
der eine oder die mehreren Kanäle (303) einen Probenkanal (208) mit einem Probeneinlass (210) und einem Probenauslass (212) sowie einen Regenerierungsmittelkanal (258) mit einem Regenerierungsmitteleinlass (260) und einem Regenerierungsmittelauslass (262) umfassen; wobei eine Ionenaustauschmembran (104) den Probenkanal (208) und den Regenerierungsmittelkanal (258) trennt, eine erste Leitung (311) eine Fluidverbindung zwischen einer Elutionsmittelquelle (204) und dem Probeneinlass (210) herstellt, eine zweite Leitung (313) eine Fluidverbindung zwischen einer Regenerierungsmittelquelle (254) und dem Regenerierungsmitteleinlass (260) herstellt; der Strömungspfad (314) einen Probenpfad (214) und einen Regenerierungsmittelpfad (264) umfasst; wobei der Probenpfad (214) einen Proben-Vorderlauf (216) umfasst, der die Elutionsmittelquelle (204) mit dem Probeneinlass (210) verbindet, einen Probenstrompfad (218), der durch den Probenkanal (208) verläuft, sowie einen stromabwärts gelegenen Probenpfad (220) vom Probenauslass (212); wobei der Regenerierungsmittelpfad (264) einen Regenerierungsmittel-Vorkreis (266), der eine Regenerierungsmittelquelle (254) mit dem Regenerierungsmitteleinlass (260) verbindet, einen Regenerierungsmittelstrompfad (268) durch den Regenerierungsmittelkanal (258) und einen Regenerierungsmittel-Nachkreis (270) vom Regenerierungsmittelauslass (262) umfasst; und
eine oder mehrere der Messsonden (222), die unabhängig voneinander im Probenpfad (214), im Regenerationsmittelpfad (264) oder sowohl im Probenpfad (214) als auch im Regenerationsmittelpfad (264) positioniert sind.

3. Der Suppressor gemäß Anspruch 1 oder Anspruch 2, wobei die eine oder mehreren Messsonden (222) unabhängig voneinander aus einer Temperatursonde, einem Drucksensor und einem Durchflussmesser ausgewählt sind.

4. Der Suppressor gemäß einem der Ansprüche 1-3, wobei mindestens eine der Messsonden (222) in einem der Kanäle (303) positioniert ist,
wobei optional;
die Messsonde (222) in der Nähe des Auslasses (312) angeordnet ist, die Messsonde (222) in der Nähe des Einlasses (310) angeordnet ist oder die Messsonde eine erste Messsonde (222) und eine zweite Messsonde (222) umfasst, wobei die erste Messsonde (222) in der Nähe des Auslasses (312) angeordnet ist und die zweite Messsonde (222) in der Nähe des Einlasses (310) positioniert ist.

5. Der Suppressor gemäß einem der Ansprüche 1-4, wobei mindestens eine der Messsonden (222) im stromabwärtigen Pfad (320) eines der Kanäle (303) positioniert ist.

6. Der Suppressor gemäß einem der Ansprüche 1-5, wobei mindestens eine der Messsonden (222) im stromaufwärtigen Pfad (316) eines der Kanäle (303) angeordnet ist.

7. Der Suppressor gemäß Anspruch 1, wobei: der
Detektor (206) ein Massenspektrometer ist.

8. Der Suppressor gemäß einem der Ansprüche 1 bis 7, wobei die Sonde (222) ein Arbeitsende (307) aufweist, das mit einem Fluid im Strömungspfad (314) in Kontakt steht, wobei das Arbeitsende (307) bündig an einer Wand (305) einer den Fluidpfad (314) definierenden Leitung angeordnet ist.

9. System (200) zur Überwachung und Steuerung eines wässrigen Ionenflusses, umfassend:
einen Suppressor (202) gemäß Anspruch 2 oder einem der Ansprüche 3 bis 8, die von Anspruch 2 abhängig sind;
eine Elutionsmittelquelle (204), die fluidisch mit dem Probeneinlass (210) verbunden ist, und eine Regenerierungsmittelquelle (254), die fluidisch mit dem Regenerierungsmitteleinlass (260) verbunden ist; und
einen Detektor (206), der fluidisch mit dem Probenauslass (212) oder mit der Regenerierungsmittelquelle (254) verbunden ist.

10. Verfahren (500) zum Steuern eines Suppressors (202) gemäß einem der Ansprüche 1 bis 8, wobei das Verfahren Folgendes umfasst:
Bereitstellen (502) eines Elutionsmittels für den Suppressor (202);
Überwachen (504) einer Eigenschaft eines Fluids in einem Strömungspfad (314) eines Kanals (303) des Suppressors (504), um eine überwachte Eigenschaft bereitzustellen; und
Leiten eines stromabwärts gelegenen Probenpfads (220) des Eluents vom Suppressor (202) zu einem Detektor (206), wenn eine überwachte Eigenschaft innerhalb eines vordefinierten Bereichs (506, 508) liegt, oder verhindern, dass der stromabwärts gelegenen Probenpfad (220) den Detektor (206) erreicht, wenn die überwachte Eigenschaft außerhalb des vordefinierten Bereichs (506, 510) liegt.

11. Verfahren nach Anspruch 10, wobei die überwachte Eigenschaft eine Temperatur, ein Druck oder eine Durchflussrate des Strömungspfads (314) ist.

12. Verfahren nach Anspruch 10 oder Anspruch 11, wobei die überwachte Eigenschaft durch eine Messsonde (222) im Strömungspfad (314) überwacht wird, wobei die Messsonde einen Messdateneingang, der die überwachte Eigenschaft angibt, an einen Computer (228) liefert, wobei der Computer (228) einen Algorithmus enthält, der in einen Speicher (232) des Computers (228) gespeichert ist, wobei der Algorithmus, wenn er von einer CPU (230) des Computers (228) ausgeführt wird, die Messdaten-Eingabe mit dem vordefinierten Bereich vergleicht und der Computer (228) ein Ausgangssignal an eine Durchflusssteuerung (226) sendet, um den stromabwärts gelegenen Probenpfad (220) zu steuern.

## Revendications

1. Dispositif de suppression comprenant :
un ou plusieurs canaux (303), chaque canal (303) comportant une entrée (310) et une sortie (312) ;
une voie d'écoulement (314) pour chacun des canaux (303), chaque voie d'écoulement (314) comprenant une voie en amont (316) vers l'entrée (310), une voie d'écoulement de canal (318) à travers le canal (303) et connectant l'entrée (310) à la sortie (312), et une voie en aval (320) à partir de la sortie (312) ; et
une ou plusieurs sondes de mesure (222) positionnées dans la voie d'écoulement (314) ; le dispositif de suppression comprenant en outre un circuit de surveillance (332) couplé avec la
sonde de mesure (222), le circuit de surveillance (332) fournissant un signal indicatif d'une propriété d'un fluide dans la voie d'écoulement (314) mesurée par la sonde de mesure (222),
**caractérisé en ce que** le dispositif de suppression comprend en outre un régulateur de débit (226) couplé avec le circuit de surveillance (332) et configuré pour commander la voie en aval (320) en réponse au signal, et
dans lequel le canal (303) comprend un canal d'échantillon (208) et la voie en aval (320) dirige le fluide du canal d'échantillon (208) dans un détecteur (206) lorsque le signal est maintenu dans une plage prédéfinie, et la voie en aval (320) empêche le fluide d'entrer dans le détecteur (206) lorsque le signal est en dehors de la plage prédéfinie.

2. Dispositif selon la revendication 1, dans lequel :
le ou les canaux (303) comprennent un canal d'échantillon (208) ayant une entrée d'échantillon (210) et une sortie d'échantillon (212) ainsi qu'un canal de régénérant (258) ayant une entrée de régénérant (260) et une sortie de régénérant (262) ; dans lequel une membrane d'échange d'ions (104) sépare le canal d'échantillon (208) et le canal de régénérant (258), un premier conduit (311) fournit une connexion fluidique entre une source d'éluant
(204) et l'entrée d'échantillon (210), un deuxième conduit (313) assure la communication fluidique entre une source de régénérant (254) et l'entrée de régénérant (260) ;
La voie d'écoulement (314) comprend une voie d'échantillon (214) et un chemin régénératif (264) ; dans lequel le trajet de l'échantillon (214) comprend un trajet en amont de l'échantillon (216) reliant la source d'écouvillon (204) à l'entrée de l'échantillon (210), un trajet de flux d'échantillon (218) à travers
le canal d'échantillon (208) et une voie d'échantillon en aval (220) à partir de la sortie d'échantillon (212) ; dans lequel la voie de régénérant (264) comprend une voie de régénérant en amont (266) reliant une source de régénérant (254) à l'entrée de régénérant (260), une voie de régénérant (268) à travers le canal de régénérant (258), et une voie de régénérant en aval (270) à partir de la sortie de régénérant (262) ; et
une ou plusieurs des sondes de mesure (222) positionnées de façon indépendante dans la voie d'échantillon (214), dans la voie de régénérant (264) ou dans la voie d'échantillon (214) et dans la voie de régénérant (264).

3. Dispositif de suppression selon la revendication 1 ou la revendication 2, dans lequel la ou les sondes de mesure (222) sont choisies de façon indépendante parmi une sonde de température, un capteur de pression et un débitmètre.

4. Dispositif de suppression selon l'une quelconque des revendications 1 à 3, dans lequel au moins une des sondes de mesure (222) est positionnée dans l'un des canaux (303)
dans lequel, de manière optionnelle ;
la sonde de mesure (222) est positionnée à proximité de la sortie (312), la sonde de mesure (222) est positionnée à proximité de l'entrée (310), ou
la sonde de mesure comprend une première sonde de mesure (222) et une deuxième sonde de mesure (222), la première sonde de mesure (222) étant positionnée à proximité de la sortie (312) et la deuxième sonde de mesure (222) étant positionnée à proximité de l'entrée (310).

5. Dispositif de suppression selon l'une quelconque des revendications 1 à 4, dans lequel au moins une des sondes de mesure (222) est positionnée dans la voie en aval (320) de l'un des canaux (303).

6. Dispositif de suppression selon l'une quelconque des revendications 1 à 5, dans lequel au moins une des sondes de mesure (222) est positionnée dans la voie en amont (316) de l'un des canaux (303).

7. Dispositif de suppression selon la revendication 1, dans lequel : le détecteur (206) est un spectromètre de masse.

8. Dispositif de suppression selon l'une quelconque des revendications 1 à 7, dans lequel la sonde (222) comprend une extrémité active (307) en contact avec un fluide dans la voie d'écoulement (314), l'extrémité active (307) étant positionnée pour affleurer une paroi (305) d'un conduit définissant la voie fluidique (314).

9. Système (200) de surveillance et de commande de flux ionique aqueux comprenant :
un dispositif de suppression (202) selon la revendication 2 ou l'une quelconque des revendications 3 à 8 en tant que revendication dépendante de la revendication 2 ;
une source d'éluant (204) connectée de façon fluidique à l'entrée d'échantillon (210) et une source de régénérant (254) connectée de façon fluidique à l'entrée de régénérant (260) ; et
un détecteur (206) relié de manière fluidique à la sortie d'échantillon (212) ou à la source de régénérant (254).

10. Procédé (500) de commande d'un dispositif de suppression (202) selon l'une quelconque des revendications 1 à 8, le procédé comprenant :
l'acheminement (502) d'un éluant au dispositif de suppression (202) ;
la surveillance (504) d'une propriété d'un fluide dans une voie d'écoulement (314) d'un canal (303) du dispositif de suppression (504) pour fournir une propriété surveillée ; et
la direction d'une voie en aval d'échantillon (220) de l'éluant du dispositif de suppression (202) vers un détecteur (206) si une propriété surveillée se situe dans une plage prédéfinie (506, 508) ou l'empêchement de la voie en aval de l'échantillon (220) d'atteindre le détecteur (206) si la propriété surveillée se situe en dehors de la plage prédéfinie (506, 510).

11. Procédé selon la revendication 10, dans lequel la propriété surveillée est une température, une pression ou un débit de la voie d'écoulement (314).

12. Procédé selon la revendication 10 ou la revendication 11, dans lequel la propriété surveillée est surveillée par une sonde de mesure (222) dans la voie d'écoulement (314), la sonde de mesure fournissant une entrée de données de mesure indicative de la propriété surveillée à un ordinateur (228 ), ledit ordinateur (228) comprenant un algorithme écrit dans une mémoire (232) de l'ordinateur (228), dans lequel lorsque l'algorithme est exécuté par un processeur (230) de l'ordinateur (228), l'algorithme compare les données de mesure saisies à la plage prédéfinie, et l'ordinateur
(228) envoie un signal de sortie à un contrôleur de flux (226) pour diriger la voie en aval de l'échantillon (220).
